# EUROPEAN PATENT SPECIFICATION

(11) **EP 1 440 099 B1**
(45) Date of publication and mention of the grant of the patent: **07.11.2007**
(21) Application number: 02777082.5
(22) Date of filing: 11.09.2002
(51) Int. Cl.: C08F 293/00, C08L 53/00

(54) **VINYLAROMATIC COPOLYMERS MODIFIED WITH (METH) ACRYLONITRILE AND THEIR USE IN A MIXTURE WITH VINYLAROMATIC COPOLYMERS GRAFTED ON RUBBER**
VINYLAROMATISCHE COPOLYMERE MIT (METH)ACRYLNITRIL MODIFIZIERT UND IHRE ANWENDUNG IN MISCHUNGEN AUS VINYLAROMATISCHEN KAUTSCHUKPROPFCOPOLYMEREN
COPOLYMERES VINYLAROMATIQUES MODIFIES AVEC (METH)ACRYLONITRILE, ET LEUR UTILISATION DANS UN MELANGE AVEC DES COPOLYMERES VINYLAROMATIQUES GREFFES SUR DU CAOUTCHOUC

(30) Priority: 27.09.2001 IT MI20010200
(43) Date of publication of application: 28.07.2004
(73) Proprietor: Polimeri Europa S.p.A., 72100 Brindisi (IT)
(72) Inventor: BUONERBA, Claudio DI, deceased (IT); LONGO, Aldo, I-46100 Mantova (IT); CARDI, Nicoletta, I-28041 Arona-Novara (IT); PO', Riccardo, I-57100 Livorno (IT)
(74) Representative: De Gregori, Antonella
(86) International application number: PCT/EP2002/010251
(87) International publication number: WO 2003/029317

(56) References cited:
- US-A- 5 677 388
- US-B1- 6 239 226
- US-B1- 6 271 308

## Description

The present invention relates to block vinylaromatic copolymers modified with (meth)acrylonitrile and their use in a mixture with vinylaromatic copolymers grafted on rubber.

Vinylaromatic copolymers modified with monomers deriving from (meth)acrylic acid, such as random styrene-acrylonitrile copolymers, commonly called SAN, are known products and are industrially prepared by the radicalic polymerization of the two monomers by means of a process in emulsion, suspension or mass.

In the case of SAN, styrene and acrylonitrile (AN) form an azeotropic system containing 76% by weight of styrene, but in spite of this the final composition of copolymers can be changed by varying the composition of the monomers in the feeding mixture. The properties of SAN copolymers are strictly linked to their composition and more specifically to their content of AN. The hardness of the copolymer and viscosity of the molten product, for example, asymptotically increase with an increase in the acrylonitrile content. Other properties, such as barrier properties, chemical resistance and resistance to UV-rays, also increase with an increase in the acrylonitrile content. In particular, it is possible to improve the chemical resistance of SAN copolymers by increasing the content of acrylonitrile in the copolymer even up to 40%, but this jeopardizes the mechanical properties of the product. In order to obtain a material which is still processable, in fact, due to the high percentage of acrylonitrile, the copolymer must have a rather low molecular weight.

It is possible to enhance the mechanical properties, such as impact strength, of SAN copolymers, both traditional and with a high acrylonitrile content. The impact strength of SAN copolymers is generally improved by mixing with small quantities of elastomers, for example polybutadiene or butadiene-styrene rubbers, in this way however one of the main characteristics of SAN copolymers, i.e. the surface gloss, is reduced.

A system for obtaining materials containing a vinylaromatic monomer, such as styrene, and acrylonitrile with the typical SAN properties, such as surface gloss and resistance to solvents, without losing the remaining mechanical properties, consists in mixing a random styrene-acrylonitrile copolymer, containing from 20 to 40% by weight of acrylonitrile, with a styrene-acrylonitrile copolymer grafted on rubber, for example polybutadiene, in which the content of rubber can reach up to 65% by weight. The product obtained, commonly called ABS (acrylonitrile-butadiene-styrene), has extremely high morphological, chemical and mechanical characteristics.

The Applicant has now found that it is possible to synthesize SAN copolymers, also with high acrylonitrile contents, having an enhanced impact strength and higher chemical resistance with respect to traditional SAN copolymers with an equal molar content of the two monomers, by effecting the polymerization of the monomers so as to have products with a structure comprising at least two blocks with a different composition. The copolymers thus obtained are characterized by a high molecular weight, have fluidity of the molten product which makes them easily processable and the remaining mechanical properties, such as tensile strength and flexural strength, substantially equal to those of equivalent polymers produced with the traditional methods. Furthermore, even though they have an improved impact strength, they maintain their gloss which is a typical property of SAN not modified with rubber. If these products, moreover, are mixed with vinylaromatic copolymers grafted on rubber, they surprisingly enhance the shock resistance properties of the latter without reducing the remaining mechanical properties.

An object of the present invention therefore relates to vinylaromatic copolymers modified with at least one (meth)acrylonitrile monomer having a block structure which comprises at least two blocks, M and N, in each of the blocks M and N, the concentration of the (meth)acrylonitrile monomer ranges from 0.5 to 85% by weight, on the condition that between two adjacent blocks there is a difference of said concentration of at least 8 percentage points and that the total concentration of said (meth)acrylonitrile monomer in the block copolymer ranges from 20 to 60% by weight.

A further object of the present invention relates to polymeric compositions comprising:
a) 40-98% by weight, preferably 50-85% of a vinylaromatic copolymer modified with at least one (meth)acrylonitrile monomer having a block structure which comprises at least two blocks, M and N, in each of the blocks M and N, the concentration of (meth)acrylonitrile monomer ranges from 0.5 to 85% by weight, on the condition that between two adjacent blocks there is a difference of said concentration of at least 8 percentage points and that the total concentration of said (meth)acrylonitrile monomer in the block copolymer ranges from 20 to 60% by weight;
b) 2-60% by weight, preferably 15-50% of a vinylaromatic copolymer grafted on an elastomer.

According to the present invention, the blocks of the block copolymer are generally limited to two but they can also be of a higher number, for example from 3 to 6, preferably 4 or 5, provided that the condition be maintained that between two adjacent blocks there is a difference of concentration of the (meth)acrylonitrile monomer equal to or higher than 8 percentage points, for example a difference ranging from 8 to 95, preferably from 8 to 50, percentage points. The blocks of the block copolymer have a molecular weight which is such that the weight of two adjacent blocks M and N gives a M/N ratio ranging from 35/65 to 65/35, and is preferably 50/50.

The term "vinylaromatic monomer", as used in the present description and claims, essentially refers to a product which corresponds to the following general formula: 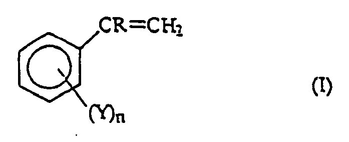 wherein R is a hydrogen or a methyl radical, n is zero or an integer ranging from 1 to 5 and Y is a halogen, such as chlorine, or an alkyl or alkoxyl radical having from 1 to 4 carbon atoms.

Examples of vinylaromatic monomers having the general formula defined above are: styrene, α-methylstyrene, methylstyrene, ethylstyrene, butylstyrene, dimethylstyrene, mono-, di-, tri-, tetra- and penta-chlorostyrene, bromostyrene, methoxy-styrene, acetoxy-styrene, etc. Preferred vinylaromatic monomers are styrene and α-methylstyrene.

Any polymerization method can be used for preparing the block copolymers object of the present invention, even if the so-called live radicalic polymerization method is preferred, of which a detailed description is available in "Macromolecules", 1993, 26, 2987 or in "Journal of American Chemistry Society" 1994, 11185.

More specifically, the block copolymers object of the present invention can be prepared starting from vinylaromatic and (meth)acrylic monomers and from initiator systems according to the following general procedure. Groups of initiator systems suitable for this type of process are selected from those listed below wherein the term alkyl indicates a C₁-C₄ (iso) alkyl hydrocarbon: tetra-alkylthiouram disulfides, alkyldithiocarbamates, ethers of benzopinacol, esters of benzopinacol, dicyano-substituted tetraphenyl ethane, triphenylmethylazo alkyls, benzylnitroxyl derivatives, mixtures between nitroxyl radicals and radical generator compounds such as, for example, mixtures of nitroxyl radicals and peroxides, mixtures of nitroxyl radicals and hydroperoxides, mixtures of nitroxyl radicals and peresters, mixtures of nitroxyl radicals and percarbonates, mixtures of nitroxyl radicals and azobisdialkyldinitriles, mixtures of nitroxyl radicals and tetra-alkylthiouramdisulfides; alkoxyamines described in U.S. patent 4,581,429; alkylnitroxyls.

Specific and particularly preferred examples of initiator systems are the following: 4-hydroxy-2,2,6,6-tetramethylpiperidinyloxy radical/benzoyl peroxide in a molar ratio of less than 4; 2,2,6,6-tetramethylpyrrolidinyloxy radical/dibenzoyl peroxide in a molar ratio of less than 4, preferably from 1/1 to 3/1; 2,2,6,6-tetramethylpiperidinyloxy radical/dicumyl peroxide in a molar ratio of less than 4, preferably from 1/1 to 3/1; 2,2,6,6-tetramethylpiperidinyloxy radical/N,N'-azobis-(diisobutyronitrile) in a molar ratio of less than 4, preferably from 1/1 to 3/1; 1-phenyl-1-(2,2,6,6-tetramethylpiperidinyloxy) ethane; 2-benzoyl-1-phenyl-1-(2,2,6,6-tetramethylpiperidinyloxy)ethane, etc.

Once the polymerization of the first polymeric block is complete, the polymerization process of the second block continues by feeding the respective mixture of monomers in the presence of the same initiator system.

The distribution of the monomers inside each block can be of the random type.

.... AASASASSASSSAASASASSAAAASSAS....

wherein "A" represents a (meth)acrylic unit and "S" a vinylaromatic unit, or of the alternating type,

... ASASASASASASAS....

or in blocks,

.... AAAASSSSSAAAASSS....

or of the gradient type. The situation in which the distribution is random or alternating or an intermediate case between these, is preferable.

The polymerization of the monomers can be carried out in continuous, batchwise or in semi-continuous, at a temperature ranging from 60 to 160°C, depending on the initiator selected, and at such a pressure as to maintain the monomers in liquid phase. Furthermore, the polymerization can take place in the presence of an organic solvent, such as ethylbenzene, in suspension or in mass.

In a batch or semi-continuous process, the initiator is added to the monomers in pure form or in the form of a solution or suspension in a quantity ranging from 0.01 to 2% in moles with respect to the total moles of monomers.

In a continuous process, the monomers, initiator and, optionally, the solvent are fed in continuous to a polymerization reactor at a flow-rate which is such as to provide residence times suitable for reaching conversions preferably ranging from 5 to 95% for each block.

Optionally, but not necessarily, the initiator can be added slowly during the whole duration of the reaction or part of it. Also one of the two monomers, or both of them, can be dosed in portions in subsequent times so as to form the microstructure of each block. At the end, the polymer is isolated from the polymerization mixture with one of the methods known in the art, for example by precipitation in a suitable non-solvent, or by the removal of the non-reacted monomers under vacuum and/or at a high temperature.

At the end of the polymerization, the end copolymer has a number average molecular weight ranging from 20,000 to 500,000, a content of monomer deriving from (meth)acrylic acid of up to 60% by weight, preferably from 25 to 55%, a Melt Flow Rate at 220°C (MFR) ranging from 0.1 to 150 and a shock resistance property measured according to Charpy ISO 179 I and U ranging from 10 to 40 kj/m².

The block copolymer object of the present invention can be used as such to product end-articles by means of forming technologies known in the art, such as extrusion, blow-moulding, the thermoforming of pre-formed sheets, or it can be used in a mixture with other thermoplastic polymers and copolymers, such as polystyrenes, high impact polystyrenes, polycarbonates, polymethylmethacrylate, polyphenylethers, polybutadiene, acrylic elastomers, vinylaromatic elastomers, etc. More specifically, blending with vinylaromatic copolymers grafted on an elastomeric core to produce high impact materials of which the most significant examples are ABS (Acrylonitrile-Butadiene-Styrene) resins, is preferred.

In grafts for ABS, whose preparation is described, for example, in U.S. patents 2,820,773 or 3,238,275, the elastomer is present in a quantity ranging from 20 to 65% by weight, the complement to 100 consisting of a conventional grafted vinylaromatic copolymer, obtained from one or more monomers having general formula (I) and acrylonitrile. The elastomer generally consists of polybutadiene or (co)polymers of butadiene with other monomers, such as styrene, or of isoprene.

The block copolymers object of the present invention can also be mixed with other copolymers grafted on elastomers such as AES (Acrylonitrile-EP(D)M rubber-Styrene) resins. In these grafted copolymers, the content of elastomer ranges from 5 to 50% by weight, preferably from 10 to 35%, the complement to 100 consisting of a traditional vinylaromatic copolymer of the type mentioned above for ABS grafts. The EP(D)M rubber can be an ethylene-propylene rubber, in which the ethylene/propylene ratio ranges from 90/10 to 20/80, or an ethylene-propylene-non-conjugated diene rubber, with a content of non-conjugated diene ranging from 4 to 50% by weight. Examples of EPDM rubbers which can be used in the preparation of AES resins are ethylene/propylene/5-methyl-tetrahydroindene, ethylene/propylene/6-ethylidene-2-norbornene, ethylene/propylene/6-methylene-2-norbornene and ethylene/propylene/5-ethylidene-2-norbornene terpolymers.

AES resins are products which are known in scientific literature and their preparation is described, for example, in U.S. patents 4,202,948 or 4,166,081 or in European patent 286,071.

Other examples of vinylaromatic copolymers grafted on an elastomeric core consist of MBS resins (methylmethacrylate-butadiene-styrene) whose preparation is described, for example, in U.S. patents 2,943,074 or 3,657,391 and ASA resins (acrylonitrile-styrene-acrylate) available on the market under the trade-name of TERLURAN of BASF.

An illustrative but non-limiting example is provided hereunder for a better understanding of the present invention and for its embodiment.

### EXAMPLE 1

A SAN (Styrene-Acrylonitrile) copolymer with the formulation and according to the procedures described below (Table 1), was synthesized in a 100 litre jacketed steel autoclave, equipped with a Pfaudler stirrer and breakwater.

**Table 1**

| | | |
|---|---|---|
| Styrene | kg | 17.5 |
| Acrylonitrile | kg | 12.6 |
| Demineralized water | kg | 30 |
| Benzoyl peroxide (with 25% water) | g | 66.9 |
| 4OH - TEMPO | g | 46.4 |
| Ethapol 1000 (acrylic acid -2-ethylhexylacrylate copolymer) | g | 10.3 |
| Sodium sulfate | g | 61.5 |

15.5 kg of styrene were charged into the autoclave with stirring at 50 revs/minute in a nitrogen atmosphere, at room temperature. Benzoyl peroxide dissolved at room temperature in 1 kg of styrene was then added, together with 4OH-TEMPO (4-hydroxy-2,2,6,6-tetramethylpiperidinyloxy radical) dissolved at room temperature in 1 kg of styrene.

The autoclave was closed, adding 5.6 kg of acrylonitrile and pressurizing at 0.5 bars. The stirring was continued at 80 revs/minute and the temperature was raised to 125°C in 45' (at 123°C the hour "0" is measured). After reaching 125°C, the pressure was brought to 3 bars with nitrogen.

After 1 hour and 45 minutes from hour "0", 26 litres of water are added, the temperature remaining at 125°C. The final pressure is 4.5 bars whereas the stirring is 150 revs/minute.

After 2 hours and 45' from hour "0", acrylonitrile according to the formulation, is added. The final pressure is 7 bars. Immediately after adding the acrylonitrile, the suspending agent Ethapol 1000 dissolved at high temperature in 1 litre of demineralized water, is added, the container and adding line being washed with 1 litre of demineralized water, and sodium sulfate dissolved in 1 litre of demineralized water is subsequently added, the container and adding line also in this case being washed with 1 litre of demineralized water.

After 4 hours and 30 minutes from hour "0", the temperature was increased to 135°C in 20 minutes and the pressure to 8.5 bars.

After 11 hours and 30 minutes from hour "0", the mixture is cooled and discharged onto a sieve. The beads are washed on the sieve until the water is limpid, the beads are then centrifuged and dried with a stream of air at 80°C.

When the beads are dry, they are extruded at 220°C under vacuum to reduce the content of residual monomers. A block polymer A and B is obtained with a content of acrylonitrile in block A of 24% by weight and in block B of 45% by weight. After characterization, the copolymer AB had the physico-chemical characteristics indicated in Table 2.

**Table 2**

| | | |
|---|---|---|
| Residual styrene monomer | weight % | 0.024 |
| Residual acrylonitrile monomer | weight % | 0.35 |
| Acrylonitrile in the polymer | weight % | 35 |
| Weight average molecular weight | Dalton | 86000 |
| Polydispersity (Mw/Mn) | - | 1.78 |
| Melt Flow Rate 220°C, 10 kg | g/10' | 4.5 |

Upon comparison with a commercial SAN (LURAN 388S of BASF) with an equal average content of acrylonitrile and equal fluidity, the copolymer of this example has a higher impact strength and chemical resistance and equivalent tensile strength and flexural strength (Table 3).

**Table 3**

| | EXAMPLE | LURAN 388S |
|---|---|---|
| MRF 220°, 10 kg (g/10') | 4.5 | 4.5 |
| Charpy ISO I and U (kj/m²) | 25.1 | 17.4 |
| ISO 527 Tensile strength Maximum stress (MPa) | 73.6 | 77.6 |
| Ultimate elongation (%) | 2.59 | 3.60 |
| Elastic modulus (MPa) | 3770 | 3610 |
| ISO 178 Flexural strength Maximum stress (MPa) | 120.8 | 126.6 |
| Ultimate arrow (%) | 3.71 | 3.80 |
| Elastic modulus (MPa) | 3800 | 3715 |

An ISO 527 tensile test sample of the copolymer of the example, immersed in acetone for 10' remains unaltered whereas an equal LURAN 388S test sample immersed in acetone has significant alterations mainly in correspondence with edges and stress areas.

### EXAMPLE 2

The copolymer of Example 1 and commercial SAN were evaluated in a mixture with a commercial ABS Graft produced by EniChem S.p.A. called KGM 55, obtained from an emulsion process and having a polybutadiene content of 53% by weight approximately, with 80% of polybutadiene particles having a diameter equal to about 0.18 µm and 20% diameter equal to about 0.36 µm.

Mixtures (1-4) with the materials already characterized as such, according to the following formulation (Table 4), were prepared in a twin-screw extruder with two distributors in continuous.

**Table 4**

| | 1 | 2 | 3 | 4 |
|---|---|---|---|---|
| SAN EXAMPLE 1 (%) | 81.2 | | 68.0 | |
| LURAN 388S (%) | | 81.2 | | 68,0 |
| ABS Graft KGM 55 (%) | 18.8 | 18.8 | 32.0 | 32.0 |
| Irganox 1076 (phr) | 0.1 | 0.1 | 0.1 | 0.1 |
| Ethylenebisstearylamide wax (phr) | 1.5 | 1.5 | 1.5 | 1.5 |

Also in a mixture with ABS, the copolymer of Example 1 shows excellent impact strength properties (Table 5).

**Table 5**

| | 1 | 2 | 3 | 4 |
|---|---|---|---|---|
| Charpy ISO 179 I and A (kj/m²) | 8.4 | 3.7 | 20.8 | 17.4 |
| ISO 527 tensile strength Yield point (MPa) | 57.1 | 60.5 | 46.9 | 49.9 |
| Yield elongation (%) | 2.7 | 2.7 | 2.6 | 2.8 |
| Breaking load (MPa) | 42.1 | 43.5 | 34.6 | 36.0 |
| Ultimate elongation (%) | 14.0 | 9.0 | 22.3 | 14.4 |
| Elastic modulus (MPa) | 2930 | 2920 | 2390 | 2430 |
| ISO 178 Flexural strength Maximum stress (MPa) | 87.0 | 90.3 | 70.5 | 73.0 |
| Elastic modulus (MPa) | 3000 | 2990 | 2430 | 2450 |

## Claims

1. Vinylaromatic copolymers modified with at least one (meth)acrylonitrile monomer having a block structure which comprises at least two blocks, M and N, in each of the blocks M and N, the concentration of the (meth)acrylonitrile monomer ranges from 0.5 to 85% by weight, on the condition that between two adjacent blocks there is a difference of said concentration of at least 8 percentage points and that the total concentration of said (meth)acrylonitrile monomer in the block copolymer ranges from 20 to 60% by weight.

2. The block copolymers according to claim 1, wherein there are two, or from 3 to 6 blocks on the condition that between two adjacent blocks there is a difference in concentration of the (meth)acrylonitrile monomer equal to or higher than 8 percentage points.

3. The block copolymers according to claim 1 or 2, wherein the difference in concentration of (meth)acrylonitrile monomer between two adjacent blocks ranges from 8 to 95, preferably from 8 to 50, percentage points.

4. The block copolymers according to any of the previous claims, wherein the blocks have a molecular weight which is such that the weight of two adjacent blocks M and N is such as to give an M/N ratio ranging from 35/65 to 65/35, and is preferably 50/50.

5. The block copolymers according to any of the previous claims, wherein the vinylaromatic monomer is selected from those having the general formula: 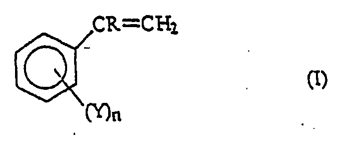 wherein R is a hydrogen or a methyl radical, n is zero or an integer ranging from 1 to 5 and Y is a halogen, such as chlorine, or an alkyl or alkoxyl radical having from 1 to 4 carbon atoms.

6. The block copolymers according to any of the previous claims, wherein the distribution of the monomers inside each block is of the random type.
.... AASASASSASSSAASASASSAAAASSAS....
wherein "A" represents a (meth)acrylic unit and "S" a vinylaromatic unit, or of the alternating type,
.... ASASASASASASAS....
or in blocks,
.... AAAASSSSSAAAASSS....
or of the gradient type.

7. The block copolymers according to claim 6, wherein the distribution is of the random or alternating type or an intermediate case between these.

8. The block copolymers according to any of the previous claims, having a number average molecular weight ranging from 20,000 to 500,000, a content of (meth)acrylonitrile monomer of up to 60% by weight, a Melt Flow Rate at 220°C (MFR) ranging from 0.1 to 150 and a shock resistance property measured according to Charpy ISO 179 I and U ranging from 10 to 40 kJ/m².

9. A process for the preparation of the block copolymers according to any of the previous claims which comprises reacting one or more vinylaromatic monomers and at least one (meth)acrylonitrile monomer according to the live radicalic polymerization in the presence of a catalytic system selected from tetra-alkylthiouram disulfides, alkyldithiocarbamates, ethers of benzopinacol, esters of benzopinacol, dicyano-substituted tetraphenyl ethane, triphenylmethylazo alkyls, benzylnitroxyl derivatives, mixtures between nitroxyl radicals and radical generator compounds such as, for example, mixtures of nitroxyl radicals and peroxides, mixtures of nitroxyl radicals and hydroperoxides, mixtures of nitroxyl radicals and peresters, mixtures of nitroxyl radicals and percarbonates, mixtures of nitroxyl radicals and azobisdialkyldinitriles, mixtures of nitroxyl radicals and tetra-alkylthiouramdisulfides; alkoxyamines; alkylnitroxyls.

10. The process according to claim 9, wherein the catalytic system is selected from: 4-hydroxy-2,2,6,6-tetramethylpiperidinyloxy radical/benzoyl peroxide in a molar ratio of less than 4; 2,2,6,6-tetramethylpyrrolidinyloxy radical/dibenzoyl peroxide in a molar ratio of less than 4; 2,2,6,6-tetramethylpiperidinyloxy radical/dicumyl peroxide in a molar ratio of less than 4; 2,2,6,6,-tetramethylpiperidinyloxy radical/N,N'-azobis-(diiso-butyronitrile) in a molar ratio of less than 4; 1-phenyl-1-(2,2,6,6-tetramethylpiperidinyloxy) ethane; 2-benzoyl-1-phenyl-1-(2,2,6,6-tetramethylpiperidinyl-oxy)ethane.

11. The process according to claim 9 or 10, wherein the polymerization of the monomers can be carried out in continuous, batchwise or in semi-continuous, at a temperature ranging from 60 to 160°C and at such a pressure as to maintain the monomers in liquid phase.

12. The process according to any of the claims from 9 to 11, wherein, in batch or semi-continuous processes, the initiator is added to the monomers in a quantity ranging from 0.01 to 2% in moles with respect to the total moles of monomers.

13. The process according to any of the claims from 9 to 11, wherein the monomers, the initiator and, optionally, the solvent are fed in continuous to a polymerization reactor at a flow-rate which is such as to provide residence times suitable for reaching conversions ranging from 5 to 95% for each block.

14. Polymeric compositions comprising:
a) 40-98% by weight, preferably 50-85%, of a vinylaromatic copolymer modified with at least one (meth)acrylonitrile monomer having a block structure which comprises at least two blocks, M and N, in each of the blocks M and N, the concentration of the (meth)acrylonitrile monomer ranges from 0.5 to 85% by weight, on the condition that between two adjacent blocks there is a difference of said concentration of at least 8 percentage points and that the total concentration of said (meth)acrylonitrile monomer in the block copolymer ranges from 20 to 60% by weight;
b) 2-60% by weight, preferably 15-50% of a vinylaromatic copolymer grafted on an elastomer.

15. The compositions according to claim 14, wherein the vinylaromatic copolymer grafted on an elastomer is a graft for ABS in which the elastomer is present in a quantity ranging from 20 to 65% by weight.

16. The compositions according to claim 15, wherein the elastomer consists of polybutadiene or copolymers of butadiene with other monomers such as styrene or isoprene.

17. The compositions according to claim 14, wherein the vinylaromatic copolymer grafted on an elastomer is an AES resin in which the content of elastomer ranges from 5 to 50% by weight.

18. The compositions according to claim 17, wherein the elastomer is an EP (D) M rubber selected from an ethylene-propylene rubber, in which the ethylene/propylene ratio ranges from 90/10 to 20/80, or an ethylene-propylene-non-conjugated-diene, with a non-conjugated diene content ranging from 4 to 50% by weight.

19. The compositions according to claim 14, wherein the vinylaromatic copolymer grafted on an elastomer is an MBS (methylmethacrylate-butadiene-styrene) resin or an ASA (acrylonitrile-styrene-acrylate) resin.

## Patentansprüche

1. Vinylaromatische Copolymere, modifiziert mit wenigstens einem (Meth)acrylnitrilmonomer mit einer Blockstruktur, umfassend, wenigstens zwei Blöcke, M und N, wobei in jedem der Blöcke M und N die Konzentration des (Meth)acrylnitrilmonomers in einem Bereich von 0,5 bis 85 Gew.-% liegt, mit der Maßgabe, dass zwischen zwei benachbarten Blöcken ein Unterschied in der genannten Konzentration von wenigstens 8 Prozentpunkten vorliegt, und dass die Gesamtkonzentration des genannten (Meth)acrylnitrilmonomers in dem Blockcopolymer in einem Bereich von 20 bis 60 Gew.-% liegt.

2. Blockcopolymere nach Anspruch 1, wobei zwei oder 3 bis 6 Blöcke vorliegen, mit der Maßgabe, dass zwischen zwei benachbarten Blöcken ein Unterschied in der Konzentration des (Meth)acrylnitrilmonomers gleich oder höher als 8 Prozentpunkte vorliegt.

3. Blockcopolymere nach Anspruch 1 oder 2, wobei der Unterschied in der Konzentration an (Meth)acrylnitrilmonomer zwischen zwei benachbarten Blöcken in einem Bereich von 8 bis 95, vorzugsweise von 8 bis 50 Prozentpunkten liegt.

4. Blockcopolymere nach einem der vorhergehenden Ansprüche, wobei die Blöcke ein Molekulargewicht aufweisen, das derart ist, dass das Gewicht von zwei benachbarten Blöcken M und N derart ist, um ein M/N-Verhältnis zu ergeben, das in einem Bereich von 35/65 bis 65/35 liegt und das vorzugsweise 50/50 ist.

5. Blockcopolymere nach einem der vorhergehenden Ansprüche, wobei das vinylaromatische Monomer von denen mit der allgemeinen Formel ausgewählt ist: 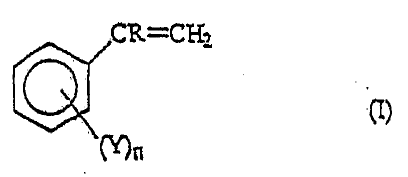 wobei R ein Hydrogen oder ein Methylrest ist, n Null ist, oder eine ganze Zahl in einem Bereich von 1 bis 5, Halogen, wie Chlor, oder ein Alkyl- oder Alkoxylrest mit 1 bis 4 Kohlenstoffatomen ist.

6. Blockcopolymere nach einem der vorhergehenden Ansprüche, wobei die Verteilung der Monomere innerhalb jeden Blocks vom statistischen Typ ist,
.... AASASASSASSSAASASASSAAAASSAS ....,
wobei "A" eine (Meth)acryl-Einheit darstellt und "S" eine vinylaromatische Einheit, oder eine vom alternierendem Typ,
.... ASASASASASASAS ....,
oder in Blöcken,
.... AAAASSSSSAAAASSS ...,
oder vom Gradienten-Typ.

7. Blockcopolymere nach Anspruch 6, wobei die Verteilung vom statistischen oder alternierenden Typ oder von einem Intermediat-Fall zwischen diesen ist.

8. Blockcopolymere nach einem der vorhergehenden Ansprüche mit einem zahlengemittelten Molekulargewicht in einem Bereich von 20.000 bis 500.000, einem Gehalt an (Meth)acrylnitrilmonomer von bis zu 60 Gew.-%, einer Schmelzfließgeschwindigkeit bei 220°C (MFR) in einem Bereich von 0,1 bis 150, und einer Stoßfestigkeitseigenschaft, gemessen gemäß Charpy ISO 179 und U in einem Bereich von 10 bis 40 kJ/m².

9. Verfahren zur Herstellung der Blockcopolymere nach einem der vorhergehenden Ansprüche, das die Reaktion von einem oder mehreren vinylaromatischen Monomeren mit wenigstens einem (Meth)acrylnitrilmonomer gemäß der lebenden radikalischen Polymerisation in Anwesenheit eines katalytischen Systems umfasst, ausgewählt aus Tetraalkylthiouramdisulfiden, Alkyldithiocarbamaten, Ethern von Benzopinakol, Estern von Benzopinakol, dicyano-substituiertem Tetraphenylethan, Triphenylmethylazoalkylen, Benzylnitroxyl-Derivaten, Mischungen zwischen Nitroxyl-Radikalen und Radikal-Erzeugerverbindungen, wie beispielsweise Mischungen aus Nitroxyl-Radikalen und Peroxiden, Mischungen aus Nitroxyl-Radikalen und Hydroperoxiden, Mischungen aus Nitroxyl-Radikalen und Perestern, Mischungen aus Nitroxyl-Radikalen und Percarbonaten, Mischungen aus Nitroxyl-Radikalen und Azobisdialkyldinitrilen, Mischungen aus Nitroxyl-Radikalen und Tetraalkylthiouramdisulfiden, Alkoxyaminen, Alkylnitroxylen.

10. Verfahren nach Anspruch 9, wobei das katalytische System ausgewählt ist aus:
4-Hydroxy-2,2,6,6-tetramethylpiperidinyloxy-Radikal/Benzoylperoxid in einem molaren Verhältnis von weniger als 4;
2,2,6,6-Tetramethylpyrrolidinyloxy-Radikal/Dibenzoylperoxid in einem molaren Verhältnis von weniger als 4;
2,2,6,6-Tetramethylpiperidinyloxy-Radikal/Dicumylperoxid in einem molaren Verhältnis von weniger als 4;
2,2,6,6-Tetramethylpiperidinyloxy-Radikal/N,N'-Azobis(diisobutyronitril) in einem molaren Verhältnis von weniger als 4;
1-Phenyl-1-(2,2,6,6-tetramethylpiperidinyloxy)ethan;
2-Benzoyl-1-phenyl-1-(2,2,6,6-tetramethylpiperidinyloxy)ethan.

11. Verfahren nach Anspruch 9 oder 10, wobei die Polymerisation der Monomere kontinuierlich, diskontinuierlich oder semi-kontinuierlich bei einer Temperatur in einem Bereich von 60 bis 160°C und bei solch einem Druck, um die Monomere in flüssiger Phase zu halten, durchgeführt werden kann.

12. Verfahren nach einem der Ansprüche 9 bis 11, wobei in diskontinuierlichen oder semi-kontinuierlichen Verfahren der Initiator zu den Monomeren in einer Menge zugegeben wird, die in einem Bereich von 0,01 bis 2 Mol%, in Bezug auf die Gesamt-Mole der Monomere, liegt.

13. Verfahren nach einem der Ansprüche 9 bis 11, wobei die Monomere, der Initiator und optional das Lösemittel kontinuierlich zu einem Polymerisationsreaktor mit einer Fließgeschwindigkeit zugeführt werden, die derart ist, um Verweilzeiten bereitzustellen, die geeignet sind, um Umwandlungen, die von 5 bis 95% für jeden Block betragen, zu erreichen.

14. Polymerzusammensetzungen, umfassend:
a) 40 - 98 Gew.-%, vorzugsweise 50 - 85%, eines vinylaromatischen Copolymers, modifiziert mit wenigstens einem (Meth)acrylnitrilmonomer mit einer Blockstruktur, umfassend, wenigstens zwei Blöcke, M und N, wobei in jedem der Blöcke M und N die Konzentration des (Meth)acrylnitrilmonomers in einem Bereich von 0,5 bis 85 Gew.-% liegt, mit der Maßgabe, dass zwischen zwei benachbarten Blöcken ein Unterschied in der genannten Konzentration von wenigstens 8 Prozentpunkten vorliegt, und dass die Gesamtkonzentration des genannten (Meth)acrylnitrilmonomers in dem Blockcopolymer in einem Bereich von 20 bis 60 Gew.-% liegt.
b) 2 - 60 Gew.-%, vorzugsweise 15 - 50%, eines vinylaromatischen Copolymers, das auf ein Elastomer aufgepfropft ist.

15. Zusammensetzungen nach Anspruch 14, wobei das vinylaromatische Copolymer, das auf ein Elastomer aufgepfropft ist, ein Pfropf für ABS ist, wobei das Elastomer in einer Menge in einem Bereich von 20 bis 65 Gew.-% vorhanden ist.

16. Zusammensetzungen nach Anspruch 15, wobei das Elastomer aus Polybutadien oder aus Copolymeren von Butadien mit anderen Monomeren, wie Styrol oder Isopren, besteht.

17. Zusammensetzungen nach Anspruch 14, wobei das vinylaromatische Copolymer, das auf ein Elastomer aufgepfropft ist, ein AES-Harz ist, wobei der Gehalt des Elastomers in einem Bereich von 5 bis 50 Gew.-% liegt.

18. Zusammensetzungen nach Anspruch 17, wobei das Elastomer ein EP(D)M-Kautschuk ist, ausgewählt aus einem Ethylen-Propylen-Kautschuk, wobei das Ethylen/Propylen-Verhältnis in einem Bereich von 90/10 bis 20/80 liegt, oder aus einem Ethylen-Propylen-nicht-konjugierten-Dien mit einem nicht-konjugierten Diengehalt in einem Bereich von 4 bis 50 Gew.-%.

19. Zusammensetzungen nach Anspruch 14, wobei das vinylaromatische Copolymer, das auf ein Elastomer aufgepfropft ist, ein MBS (Methylmethacrylat-Butadien-Styrol)-Harz oder ein ASA (Acrylnitril-Styrol-Acrylat)-Harz ist.

## Revendications

1. Copolymères vinylaromatiques modifiés par au moins un monomère (méth)acrylonitrile, ayant une structure en blocs qui comprend au moins deux blocs, M et N, dans chacun des blocs M et N, la concentration du monomère (méth)acrylonitrile s'échelonnant de 0.5 à 85%, en poids à la condition qu'entre deux blocs adjacents, il existe une différence de ladite concentration d'au moins 8 points en pourcentage, et que la concentration totale dudit monomère (méth)acrylonitrile dans le copolymère séquencé s'échelonne de 20 à 60 % en poids.

2. Copolymères séquencés selon la revendication 1, dans lesquels il y a deux, ou de 3 à 6 blocs, à la condition qu'entre deux blocs adjacents il existe une différence de concentration du monomère (méth) acrylonitrile égale ou supérieure à 8 points en pourcentage.

3. Copolymères séquencés selon la revendication 1 ou 2, dans lesquels la différence de concentration de monomère (méth)acrylonitrile entre deux blocs adjacents s'échelonne de 8 à 95, de préférence de 8 à 50, de points en pourcentage.

4. Copolymères séquences selon l'une quelconque des revendications précédentes, dans lesquels les blocs ont un poids moléculaire qui est tel que le poids de deux blocs adjacents M et N et tel qu'il donne un rapport M/N s'échelonnant de 35/65 à 65/35, et est, de préférence de 50/50.

5. Copolymères séquences selon l'une quelconque des revendications précédentes, dans lesquels le monomère vinylaromatique est sélectionné dans ceux ayant la formule générale : 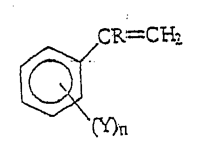 dans laquelle R est hydrogen ou un radical methyle, n est zéro ou un entier s'échelonnant de 1 à 5 et Y est un halogène, tel que chlore, ou un radical alkyle ou alcoxyle ayant de 1 à 4 atomes de carbone.

6. Copolymères séquencés selon l'une quelconque des revendications précédentes, dans lesquels la distribution des -monomères à l'intérieur de chaque bloc est de type aléatoire.
....AASASASSASSSAASASASSAAAASSAS....
dans lequel "A" représente une unité (méth)acrylique et "S" une unité vinylaromatique, ou de type alternatif,
....ASASASASASASAS....
ou en blocs,
....AAAASSSSSAAAASSS
ou de type à gradient.

7. Copolymères séquencés selon la revendication 6 dans lesquels la distribution est de type aléatoire ou alternatif ou un cas intermédiaire entre ceux-ci.

8. Copolymères séquencés selon l'une quelconque des revendications précédentes, ayant une masse moléculaire moyenne en nombre s'échelonnant de 20.000 à 500.000, une teneur en monomère (méth)acrylonitrile allant jusqu'à 60% en poids, une vitesse de fusion à 220°C (VF) s'échelonnant de 0,1 à 150, et une propriété de résistance aux chocs mesurée selon l'essai Charpy ISO 179 I et U s'échelonnant de 10 à 40 kj/m².

9. Procédé de préparation de copolymères séquencés selon l'une quelconque des revendications précédentes qui comprend la mise en réaction d'un ou plusieurs monomère(s) vinylaromatiques et d'au moins un monomère (méth)acrylonitrile selon la polymérisation radicalique vivante en présence d'un système catalytique sélectionné dans des bisulfures de tétra-alkylthiourame, des alkyldithiocarbamates, des éthers de benzopinacol, des esters de benzopinacol, du tétraphényléthane dicyano-substitué, des triphénylméthylazo alkyles, des dérivés de benzylnitroxyle, des mélanges entre des radicaux nitroxyles, et des composés générateurs de radicaux, tels que, par exemple, des mélanges de radicaux nitroxyles et de peroxydes, des mélanges de radicaux nitroxyles et d'hydroperoxydes, des mélanges de radicaux nitroxyles et de peresters, des mélanges de radicaux nitroxyles et de percarbonates, des mélanges de radicaux nitroxyles et d'azobisdialkyldinitriles, des mélanges de radicaux nitroxyles et de tétra-alkylthiourambisulfures ; des alcoxyamines; des alkylnitroxyles.

10. Procédé selon la revendication 9, dans lequel le système catalytique est sélectionné dans un radical 4-hydroxy-2,2,6,6-tétraméthylpipéridinyloxy/peroxyde de benzoyle dans un rapport molaire de moins de 4 ; un radical 2,2,6,6-tétraméthyl-pyrrolidinyloxy/peroxyde de dibenzoyle ; dans un rapport molaire inférieur à 4 ; un radical 2,2,6,6-tétraméthylpipéridinyloxy/peroxyde de dicumyle dans un rapport molaire inférieur à 4 ; un radical 2,2,6,6-tétraméthylpipéridinyloxy/N,N'-azobis-(diiso-butyronitrile) dans un rapport molaire inférieur à 4 ; du 1-phényl-1-(2,2,6,6-tétraméthylpiperidinyloxy) éthane ; du 2-benzoyl-1-phényl-1-(2,2,6,6-tétraméthylpipéridinyl-oxy)éthane.

11. Procédé selon la revendication 9 ou 10, dans lequel la polymérisation des monomères peut être réalisée en continu, en discontinu ou en semi-continu, à une température comprise entre 60 et 160°C, et à une pression telle qu'elle permet de maintenir les monomères en phase liquide.

12. Procédé selon l'une quelconque des revendications 9 à 11, dans lequel, dans des procédés discontinus ou semi-continus, l'initiateur est ajouté aux monomères dans une quantité s'échelonnant de 0,01 à 2% en moles par rapport au nombre total de moles des monomères.

13. Procédé selon l'une quelconque des revendications 9 à 11, dans lequel les monomères, l'initiateur et, facultativement, le solvant, sont introduits en continu dans un réacteur de polymérisation à un débit tel qu'il permet des temps de séjour appropriés pour atteindre des conversions s'échelonnant de 5 à 95% pour chaque bloc.

14. Compositions polymères comprenant :
a) 40-98% en poids, de préférence, 50-85% en poids, d'un copolymère vinylaromatique modifié par au moins un monomère (méth)acrylonitrile, ayant une structure en blocs qui comprend au moins deux blocs, M et N, dans chacun des blocs M et N, la concentration du monomère (méth)acrylonitrile s'échelonnant de 0.5 à 85%, en poids, à la condition qu'entre deux blocs adjacents, il existe une différence de ladite concentration d'au moins 8 points en pourcentage, et que la concentration totale dudit monomère (méth)acrylonitrile dans le copolymère séquencé s'échelonne de 20 à 60 % en poids ;
b) 2-60% en poids, de préférence, 15-50% d'un copolymère vinylaromatique greffé sur un élastomère.

15. Compositions selon la revendication 14, dans lesquelles le copolymère vinylaromatique greffé sur un élastomère est une greffe pour ABS dans laquelle la teneur en élastomère est présente dans une quantité s'échelonnant de 20 à 65% en poids.

16. Compositions selon la revendication 15, dans lesquelles l'élastomère consiste en polybutadiène ou copolymères de butadiène avec d'autres monomères, tels que styrène ou isoprène.

17. Compositions selon la revendication 14,dans lesquelles le copolymère vinylaromatique greffé sur un élastomère est une résine AES, dans laquelle la teneur en élastomère s'échelonne de 5 à 50% en poids.

18. Compositions selon la revendication 17, dans lesquelles l'élastomère est un caoutchouc EP(D)M sélectionné dans un caoutchouc éthylène-propylène, dans lequel le rapport éthylène/propylène s'échelonne de 90/10 à 20/80, ou un diène éthylène-propylène-non-conjugué, avec une teneur en diène non-conjugué s'échelonnant de 4 à 50% en poids.

19. Compositions selon la revendication 14, dans lesquelles le copolymère vinylaromatique greffé sur un élastomère est une résine MBS (méthylméthacrylate-butadiène-styrène) ou une résine ASA (acrylonitrile-styrène-acrylate).
